# EUROPEAN PATENT APPLICATION

(11) **EP 1 922 923 A2**
(43) Date of publication of application: **21.05.2008**
(21) Application number: 07022201.3
(22) Date of filing: 15.11.2007
(51) Int. Cl.: A01N 1/02

(54) **Methods and compositions for cryopreserving oocytes**

(30) Priority: 15.11.2006 US 859305 P; 30.03.2007 US 694847
(71) Applicant: Mariposa Biotechnology, Inc, San Clemente CA 92673 (US)
(72) Inventor: Diaz, David, San Clemente CA 92673 (US)
(74) Representative: Wibbelmann, Jobst

(57) **Abstract**

Disclosed are methods and compositions useful for cryopreserving oocytes and, in particular, mammalian oocytes such as human oocytes.

## Description

### CROSS-REFERENCE TO RELATED APPLICATION

This application is a continuation-in-part of the U.S. Patent Application Serial No. 11/694,847, filed March 30, 2007 which claims priority under 35 U.S.C. §119(e) to U.S. Provisional Patent Application Serial No. 60/859,305, filed November 15, 2006, both of which applications are incorporated herein by reference in their entirety.

### Field of the Invention

This invention generally relates to methods and compositions useful for cryopreserving oocytes and, in particular, mammalian oocytes such as human oocytes.

### State of the Art

The ability to cryopreserve oocytes in an easily reproducible manner that results in a high rate of viability upon thawing has not yet been achieved. However, it has been shown that it is possible to successfully produce offspring from frozen oocytes and, accordingly, this suggests that a reproducible method for freezing and thawing oocytes is achievable.

Several oocyte freezing techniques have been suggested, each with its own set of advantages and disadvantages. However, as a whole, these methods are rather inefficient, unpredictable and have yielded suboptimal rates of oocyte thaw survival, oocyte fertilization, and embryo cleavage.

Typical of these previously suggested techniques include preparing the recently harvested oocytes for cryopreservation by sequentially moving the oocytes through several solutions. In Fabbri, U.S. Patent No. 7,011,937, the harvested oocytes were contacted with a washing solution comprising synthetic serum substitute (SSS) and phosphate buffered saline (PBS) followed by incubation for, e.g., 10 minutes in an equilibration solution comprising 0.35 mL of 1.5 M propylene glycol and 0.15 mL SSS in 6.79 mL PBS before introduction of the oocytes to a cryoprotectant solution. Both the washing and the equilibration solutions of Fabbri were conducted at room temperature for about 15 minutes before use.

In Boldt, U.S. Patent Application Publication No. US 2005/0250088 A1, sodium depleted media are employed.

After equilibration, cryoprotecting solutions containing, for example, solutions comprising propylene glycol or DMSO are contacted with the oocyte such that the cryoprotectant is introduced into the cytoplasm of the oocyte as intracytoplasmic water is removed both via osmotic principles. Typically, the initial temperature of at least the first cryoprotecting solution is maintained at approximately room temperature (e.g., 20 to 25°C). Each cryoprotecting solution contains a cryoprotecting agent (e.g., 1.5 M propylene glycol) and optionally a dehydrating agent such as sucrose. The cryoprotecting agent is introduced into the cytoplasm and then the cells are cooled in a controlled manner until finally they are immersed in liquid nitrogen for cryopreservation.

Thawing of the cryopreserved oocytes typically occurs in an inverse manner wherein the initial solutions are maintained at high concentrations of cryoprotectant with continued dilution of the cryoprotectant in subsequent solutions. Unlike the freezing process, the thawing process is typically initiated at around 30°C with subsequent solutions maintained at about room temperature.

Notwithstanding statements of success in the literature, the overall success rate from freezing to live birth is unacceptably low.

### SUMMARY OF THE INVENTION

This invention provides, in part, methods and compositions for use in cryoprotecting oocytes.

This invention is predicated, in part, on the discovery that minimization of cellular stress on the harvested oocyte prior to as well as after initiation of cryopreserving techniques is essential to provide for reproducible cryopreservation methodology. Specifically, in one aspect, this invention is directed to the discovery that the use of one or more stabilization solutions maintained at about the temperature of the animal body and in particular human body optionally coupled with the subsequent use of one or more cryopreservation solutions also initially maintained at about body temperature minimizes cellular stress on changing the environment of the oocyte *from in vivo* to *in vitro* and in initiating cryopreservation.

Accordingly, in one embodiment of this invention, there is provided a method for cryopreserving freshly harvested mature animal oocytes which method comprises:
a) incubating freshly harvested mature oocytes in one or more stabilization solutions maintained at a temperature of from about 33° to about 38°C for a period of time sufficient to stabilize the oocytes to *in vitro* conditions wherein when more than one stabilization solution is employed, each solution is different from each other;
b) introducing cryoprotectant into the stabilized mature oocyte from a) above by contacting the oocyte with an aqueous solution comprising a cryoprotectant maintained at a temperature of from about 33° to about 38°C under conditions wherein at least a portion of the intracytoplasmic water is replaced by cryoprotectant;
c) transferring the oocyte from b) above to at least a first dehydrating/cryoprotecting solution comprising a cryoprotectant and a dehydrating agent maintained at a temperature of from about 33° to about 38°C under conditions sufficient to remove additional intracytoplasmic water while introducing additional cryoprotectant into the cytoplasm;
d) decreasing the temperature of the dehydrating/cryoprotecting solution of c) above to a temperature of about 22° to about 26°C during a period of from about 3 to 10 minutes;
e) transferring the oocyte in the dehydrating/protecting solution formed in d) above into a container which is then sealed; and
f) cryopreserving the oocytes.

Accordingly, in one embodiment of this invention, there is provided a stabilization solution for oocyte cryopreservation, where the stabilization solution includes, but is not limited to, Global Media, Global Media supplemented with synthetic serum substitute (SSS), human tubal solution (HTF), human tubal solution (HTF) substituted with SSS and/or an antibiotic, modified HTF (mHTF), and modified HTF (mHTF) with SSS and/or antibiotic, wherein the stabilization solution is at a temperature of from about 33°C to 38°C.

In one embodiment of this invention, there is provided a cryoprotectant solution for oocyte freezing comprising a cryaoprotectant wherein the cryoprotectant solution is maintained at a temperature of about 33°C to 38°C, and wherein the cryoprotectant solution promotes a survival of an oocyte during a process of cryopreservation.

### DESCRIPTION OF THE FIGURES

Figure 1 illustrates an oocyte in a cryoprotecting solution wherein inflow of cryoprotectant into the cytoplasm of the oocyte and outflow of the intracytoplasmic water is controlled by osmosis.

Figure 2 illustrates that disproportional outflow of intracytoplasmic water relative to inflow of the cryoprotectant results in shrinkage of the oocyte and that due to the stress conditions employed, the oval nature of the oocyte is replaced with numerous undulations which destabilize the oocyte.

Figure 3 further illustrates that continued disproportional outflow of intra-cytoplasmic water relative to inflow of the cryoprotectant into the cytoplasm of the oocyte results in still further undulation and distortion from the original oval shape of the oocyte which further destabilizes the oocyte.

The Figures above illustrate but one factor in the cellular stress induced by conventional cryoprotection. Other factors that lead to cellular stress and potential cell lysis include osmotic stresses that cause rapid outflow of water from the cell which may damage intracellular organelles and/or resulting in cell membrane rupture; thermal stresses due to abrupt changes in temperature; toxicity due to the length of time that oocyte is exposed the cryoprotectant.

### DETAILED DESCRIPTION

As used herein, the following definitions shall apply unless otherwise indicated.

"Mature animal oocytes" refers to harvested oocytes which are graded on a maturation scale as "mature stage -- MII." This scale further identifies harvested oocytes as "intermediate stage -- (MI)" or "immature stage -- (GV)".

The term "egg" as used herein is meant to be synonymous with the term "oocyte".

"Freshly harvested" means that the oocytes were harvested from the animal donor within 8 hours of initiation of the stabilization/cryopreservation process, preferably within 4 hours of initiation of the stabilization/cryopreservation process, more preferably within 1 hour of initiation of the stabilization/cryopreservation process, and even more preferably within 0.1 hours of initiation of the stabilization/cryopreservation process.

"Stabilization solutions" refer to those solutions wherein the freshly harvested mature oocyte is incubated after *in vivo* extraction and which permit the oocytes to equilibrate in its *in vitro* environment prior to initiation of the cryopreservation process. The stabilization solutions are intended to permit further maturation of the oocytes *in vitro.* Specifically, the stabilization solutions are designed to mimic the environment within the follicle from which the eggs were removed. The follicle supports ongoing processes of the oocyte maturation *in vivo* which are preferably duplicated when the oocytes are removed from the follicle and placed into the stabilization solution. The stabilization solution also provides nutrients for further meiotic development and supports metabolic processes continuing within the oocyte as well as supports the cell membrane. A further function of the stabilization solution is to remove biological wastes occurring from metabolism within the oocytes and to stabilize the intra-oocyte pH. The stabilization solution does not include any cryoprotectant, e.g., dimethyl sulfoxide (DMSO) or propylene glycol. Stabilization solutions useful in this invention include, by way of the example, Global® media (available from Life Global, IVF Online), Global® media supplemented with SSS (available from Irvine Scientific, Santa Ana, California, USA), human tubal solution (HTF - available from Irvine Scientific, Santa Ana, California, USA) optionally supplemented with SSS and/or an antibiotic (e.g., gentamicin) and modified HTF [HTF with HEPES (mHTF) - available from Life Global, IVF Online) optionally supplemented with SSS and/or an antibiotic (e.g., gentamicin), phosphate buffered saline (PBS), sodium depleted PBS (e.g., sodium hydrogen phosphate (H₂NaPO₄)) and the like.

"Stabilized oocytes" refer to mature oocytes still retaining the cumulus mass (granulosis cells) which permit maturation of the oocyte by nutrient intake through gap junctions in the cumulas mass. The mature oocyte is characterized by formation of the meiotic spindle in conjunction with extrusion of the first polar body while maintaining the integrity/activity of the intracellular proteins.

In this regard, many polypeptide hormones are found in the different compartments of the oocytes. For example, intracytoplasmic proteins such as 6-GDP; glucose phosphate isomerase (GPI); creatine kinase and LDH exert their effect specifically in the cytoplasm. Other proteins are associated with the oocyte cell membrane and are imported passively or by active endocytosis. As the *zona pelluicida,* a different group of polypeptides may play a role in receptor specificity to facilitate entry of the sperm. Furthermore, another family of proteins may remain dormant within the egg only to become activated or re-activated during subsequent embryo growth.

In any event, it is an essential feature of the stabilization solution to maintain the integrity and activity of these proteins/polypeptides so that after freezing and subsequent thawing, these proteins/polypeptides can be employed within the oocyte for their intended use.

The term "cryoprotectant" refers to a liquid which permeates across the cell wall of the animal oocyte typically by osmotic methods and which promotes survival and retention of viability of the oocyte during the process of cryopreserving as well as in the cryopreserved state. Suitable cryoprotectants are well known in the art and include, by way of example only, DMSO, ethylene glycol, propylene glycol (1,2-propanediol), glycerol, as well as mixtures of 2 or more of such cryoprotectants, and the like.

The term "dehydrating/cryoprotecting solution" refers to a cryoprotecting solution as described above which further comprises an agent to facilitate dehydration of the intra-cytoplasmic water in the oocyte during cryopreservation. Preferably, such agents do not osmotically traverse the cellular wall of the oocyte. Dehydrating agents include, sucrose, dextrose, trehalose, lactose, raffinose, and the like.

The term "Global® media," "Global® media supplemented with SSS," "human tubal solution," or modified human tubal solution," refers to a commercially available solution (as described herein) or a solution formulation of Tables 1-2, and/or Table 9.

### 1. Methodology

The methods of this invention involve a multi-step process for efficiently effecting cryopreservation of freshly harvested animal oocytes. Specifically, there is provided a method for cryopreserving freshly harvested mature harvested animal oocytes which method comprises:
a) incubating freshly harvested mature oocytes in one or more stabilization solutions maintained at a temperature of from about 33° to about 38°C for a period of time sufficient to stabilize the oocytes to *in vitro* conditions wherein when more than one stabilization solution is employed, each solution is different from each other;
b) introducing cryoprotectant into the stabilized mature oocyte from a) above by contacting the oocyte with an aqueous solution comprising a cryoprotectant maintained at a temperature of from about 33° to about 38°C under conditions wherein at least a portion of the intra-cytoplasmic water is replaced by cryoprotectant;
c) transferring the oocyte from b) above to at least a first dehydrating/cryoprotecting solution comprising a cryoprotectant and a dehydrating agent maintained at a temperature of from about 33° to about 38°C under conditions sufficient to remove additional intra-cytoplasmic water while introducing additional cryoprotectant into the cytoplasm;
d) decreasing the temperature of the dehydrating/cryoprotecting solution of c) above to a temperature of about 22° to about 26°C during a period of from about 3 to 10 minutes;
e) transferring the oocyte in the dehydrating/protecting solution formed in d) above into a container which is then sealed; and
f) cryopreserving the oocytes.

In the following discussion, the term "oocyte" refers to both the singular and plural regardless of whether this term employs terms such as "a", "the" and the like.

As to procedure a) *above, in vitro* stabilization of a freshly harvested mature oocyte prior to initiation of cryopreservation preferably comprises incubating the oocyte *in vitro* in one or more stabilization solutions at a temperature of from about 33° to 38°C for a sufficient period to permit the oocyte to be stabilized in its *in vitro* environment. In one preferred aspect of this embodiment, the stabilization solution is selected from Global Media or Global Media supplemented with SSS.

Preferably, *in vitro* stabilization of the oocyte is conducted in a first stabilization solution at a temperature of from about 35° to 38°C for a period of from about 0.4 to about 4 hour and more preferably from about 1 to 3 hours. Even more preferably, *in vitro* stabilization of the oocyte is conducted in Global media supplemented with SSS (preferably about 10 volume percent) maintained at a temperature of about 36.5° to 37.5°C for a period of about 2 hours.

Optionally, further *in vitro* stabilization of the oocyte is conducted by transferring the oocyte from the first stabilization solution to a second stabilization solution maintained at a temperature of from about 33° to 38°C for a sufficient period to permit further stabilization of the oocyte prior to introduction of cryoprotectant into the oocyte wherein the second stabilization solution is different from the first. The second stabilization solution preferably comprises mHTF and SSS and, more preferably, from about 10-30 volume percent SSS wherein the solution is maintained at a temperature of from about 33° to 38°C for a period of from about 1-8 minutes. Most preferably, this solution comprises mHTF and about 20 volume percent SSS maintained at a temperature of from about 36.5° to 37.5°C for a period of about 2 to 5 minutes and especially for about 3 minutes.

Cryopreservation of the stabilized oocyte is initiated by introducing cryoprotectant into the cytoplasm of the oocyte typically by osmotic principles. This is preferably achieved by a method which comprises contacting the stabilized oocyte with an aqueous solution comprising a cryoprotectant maintained at a temperature of from about 33° to about 38°C. In a preferred embodiment, the cryoprotectant solution comprises a cryoprotectant and SSS. Even more preferably, this solution comprises propylene glycol (PG) and about 20 volume percent SSS initially maintained at a temperature of about 35° to 37°C. The PG is preferably maintained at a concentration of from 1 to 2 M and more preferably at a concentration of about 1.5 M in an aqueous solution. Typically, this introduction phase is continued for a period sufficient to introduce a least a portion of cryoprotectant into the cytoplasm of the oocyte with the concomitant expulsion of intracytoplasmic water while maintaining the temperature of this solution as per above. Preferably, this introduction phase ranges from about 1 to 5 minutes, more preferably from about 1.5 to 3 minutes and even more preferably about 2 minutes.

Subsequently, the oocyte comprising cryoprotectant in at least a portion of its cytoplasm is transferred to one or more dehydrating/cryoprotecting solutions wherein additional intracytoplasmic water is removed, again by osmotic principles, prior to freezing. In this embodiment, further removal of intracytoplasmic water from the oocyte while introducing additional cryoprotectant into the cytoplasm is preferably conducted by a method which comprises incubating the oocyte in at least a first dehydrating/cryoprotecting solution initially maintained at a temperature of from about 33° to 38°C for a period sufficient to effect additional dehydration of coupled with introduction of additional cryoprotectant into the oocyte. Preferably, exposure of the oocytes to this first dehydrating/cryoprotecting solution ranges from about 1 to 5 minutes and, more preferably, about 3 minutes. This solution is then cooled over a period of about 3 to 10 minutes and preferably in about 5 minutes to a temperature of from about 22° to 26°C. The first dehydrating/cryoprotecting solution preferably comprises from about 1 to 2 M propylene glycol and from about 0.05 to 0.15 M sucrose; and more preferably about 1.5 M propylene glycol and about 0.12 M sucrose.

Optionally, additional removal of intracytoplasmic water from the oocyte while introducing still more cryoprotectant into the cytoplasm can be achieved by use of a second dehydrating/cryoprotecting solution. This second dehydrating/cryoprotecting solution preferably comprises from about 1 to 2 M propylene glycol and from about 0.15 to 0.3 M sucrose; and more preferably about 1.5 M propylene glycol and about 0.24 M sucrose. The exposure time of the oocytes to this first solution is relatively short and typically is from about 1 to 5 minutes but preferably 1 to 3 minutes and, even more preferably, about 2 minutes while maintaining the solution at a temperature of from about 22° to 26°C.

The so-treated oocytes are then transferred into a sealed container and cryopreserved. Cryopreservation of the prepared oocyte proceeds via conventional techniques including slow freezing of the oocytes in a manner similar to that described by Fabbri, et al., U.S. Patent No. 7,011,937, which patent is incorporated herein by reference in its entirety. In one embodiment, the so-treated oocytes are loaded into a suitable container such as a 0.25 mL plastic straw. The straws are sealed at both ends and placed in an automated biological vertical freezer like the Kryo 10 Series III (Planer 10/1.7 GB).

The straws are chilled at a controlled cooling rate to about -7°C whereupon "seeding" is performed to induce the water molecules to undergo crystallization. In a preferred embodiment, the straws are cooled at a rate of from around -0.5°C per minute to around -4°C; more preferably, the straws are cooled at a rate of from around -1 °C per minute to around -3°C; even more preferably, the straws are cooled at a rate of around 2°C per minute. After a holding period at -7°C, cooling is resumed at a controlled rate until the straw reaches about -33°C which allows diffusion of the cryoprotectant into the oocyte. In a preferred embodiment, the straws are cooled at a rate of from around -0.1°C per minute to around -1 °C; more preferably, the straws are cooled at a rate of from around -0.2°C per minute to around -0.5°C; even more preferably, the straws are cooled at a rate of around - 0.3°C per minute. The straws are then plunged into liquid nitrogen for storage.

In the methods of this invention, the intracellular cytoplasmic organelles and meiotic spindle are spared the injury resulting from the shearing force of ice crystal formation and the exposure to room temperature associated with other freezing protocols.

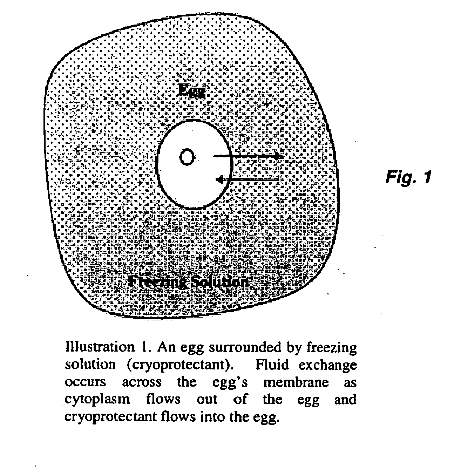

Furthermore, by limiting the time and temperature exposure of the oocyte to the propylene glycol cryoprotectant, the present invention minimizes toxicity to the oocyte. Figures 1 through 3 illustrate aspects of this invention and, in particular, illustrate that the rate at which intracellular water flows out of the egg and cryoprotectant flows into the egg will vary as saturation levels are reached. Specifically, in Figure 1, there is illustrated an egg surrounded by freezing solution (cryoprotectant). Fluid exchange occurs across the egg's membrane as intracytoplasmic water flows out of the egg and cryoprotectant flows into the egg.

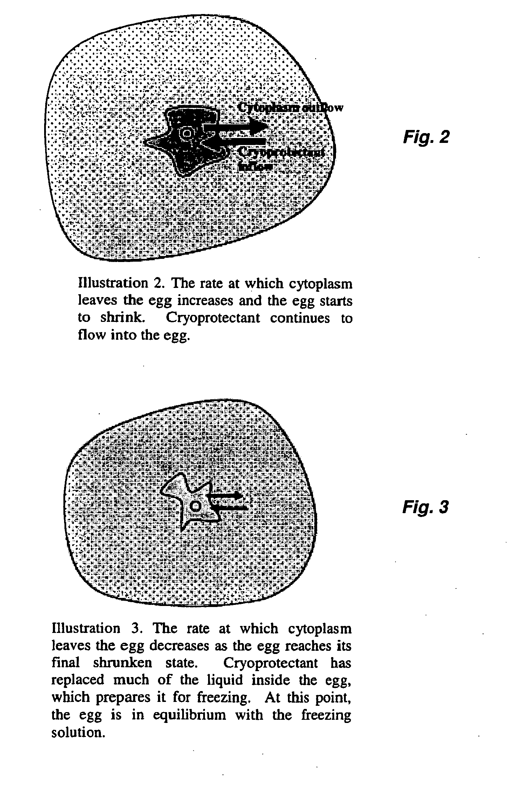

Figure 2 illustrates that removal of intracytoplasmic water is faster than replacement of cryoprotectant as described by Fabbri, et al. supra. Under conventional procedures, this disproportional flow of intracytoplasmic water out of the cell results in loss of the spherical nature of the oocyte and the presence of undulations on the surface.

Figure 3 further illustrates the egg decreases as it reaches its final shrunken state. Cryoprotectant has replaced much of the liquid inside the egg, which prepares it for freezing. At this point, the egg is in equilibrium with the freezing solution. Continued incubation of the egg in the cryoprotectant solution results in an increase in volume of the egg coupled with a gradual return to its oval shape.

### 2. Compositions

This invention is directed, in part, to the discovery that the use of one or more stabilization solutions for oocyte freezing maintained at about the temperature of the animal body and in particular human body optionally coupled with the subsequent use of one or more cryopreservation solutions also initially maintained at about body temperature minimizes cellular stress on changing the environment of the oocyte from *in vivo* to *in vitro* and in initiating cryopreservation. This invention is further directed, in part, to the discovery that the use of one or more stabilization solutions for oocyte thawing maintained at temperatures above room temperature and below body temperature minimizes cellular stress on the reanimated oocyte and stabilizes an oocyte before fertilization.

In one aspect, this invention is directed to a stabilization solution for oocyte cryopreservation, where the stabilization solution includes, but is not limited to, Global Media, Global Media supplemented with synthetic serum substitute (SSS), human tubal solution (HTF), human tubal solution (HTF) substituted with SSS and/or an antibiotic, modified HTF (mHTF), and modified HTF (mHTF) with SSS and/or antibiotic, wherein the stabilization solution is at a temperature of from about 33°C to 38°C.

In one embodiment, the stabilization solution is at a temperature of from about 35°C to 38°C.

In one embodiment, the stabilization solution is at a temperature of from about 36.5°C to 37.5°C.

In one embodiment, the stabilization solution is for oocyte freezing. In one preferred embodiment, the stabilization solution minimizes a cellular stress on changing an environment of an oocyte from *in vivo* to *in vitro.*

In one embodiment, the stabilization solution is for oocyte thawing. In one preferred embodiment, the stabilization solution stabilizes an oocyte prior to fertilization.

In one embodiment, the stabilization solution comprises the Global media supplemented with SSS maintained at a temperature of from about 36.5°C to 37.5°C. In one preferred embodiment, the SSS is present in about 10 volume percent.

In one embodiment, the stabilization solution stabilizes an oocyte prior to or after an introduction of cryoprotectant into the oocyte.

In one embodiment, the stabilization solution comprises mHTF and SSS. In one preferred embodiment, the stabilization solution comprises mHTF and SSS maintained at a temperature of from about 35°C to 38°C.

In one embodiment, the stabilization solution comprises mHTF and from about 10-30 volume percent SSS.

In one preferred embodiment, the stabilization solution comprises mHTF and about 20 volume percent SSS maintained at a temperature of from about 36.5°C to 37.5°C.

In one preferred embodiment, the stabilization solution is selected from the group consisting of Table 1, Table 2, and Table 9.

In one embodiment, this invention is directed to a cryoprotectant solution for oocyte freezing comprising a cryaoprotectant wherein the cryoprotectant solution is maintained at a temperature of from about 33°C to 38°C, and wherein the cryoprotectant solution promotes a survival of an oocyte during a process of cryopreservation.

In one embodiment, the cryoprotectant solution is maintained at a temperature of from about 35°C to 37°C.

In one embodiment, the cryoprotectant includes, but is not limited to, dimethylsulfoxide, ethylene glycol, propylene glycol, glycerol, and combination thereof.

In one preferred embodiment, the cryoprotectant is propylene glycol.

In one embodiment, the cryoprotectant further comprises SSS.

In one embodiment, the cryoprotectant is propylene glycol and about 20 volume percent SSS.

In one embodiment, the cryoprotectant is propylene glycol and about 20 volume percent SSS wherein the propylene glycol is at a concentration of from 1 to 2 M.

In another embodiment, the cryoprotectant is propylene glycol and about 20 volume percent SSS wherein the propylene glycol is at a concentration of from 1.5 M.

In one embodiment, the cryoprotectant solution further comprises an agent that facilitates dehydration of an intra-cytoplasmic water in the oocyte during the cryopreservation.

In one embodiment, the agent includes, but is not limited to, sucrose, dextrose, trehalose, lactose, and raffinose.

In one preferred embodiment, the agent is sucrose.

In one embodiment, the agent is 0.05 to 0.15 M sucrose. In another embodiment, the agent is 0.15 to 0.3 M sucrose.

In one embodiment, the cryoprotectant is 1.5 M propylene glycol and the agent is 0.12 M sucrose in the cryoprotectant solution. In another embodiment, the cryoprotectant is 1.5 M propylene glycol and the agent is 0.24 M sucrose.

In one embodiment, the cryoprotectant solution is selected from the group consisting of Table 3, Table 4, and Table 5.

The following examples are provided to illustrate certain aspects of the present invention and to aid those of skill in the art in practicing the invention. These examples are in no way to be considered to limit the scope of the invention.

### EXAMPLES

The examples below as well as throughout the application, the following compositions are described and are available commercially as stated below:
Global Media, IVF Online, p/n LGGG
Synthetic Serum Substitute (SSS), Irvine Scientific, p/n 99193
Modified Human Tubular Fluid (mHTF), Irvine Scientific, p/n 90126
Propylene Glycol, Sigma Chemicals, p/n 241229
Sucrose, Sigma Chemicals, p/n S 1888

In the Examples below, all percents are percents by volume unless otherwise specified. Likewise, all temperatures are reported in degrees Celsius unless otherwise stated.

In the Examples, the following abbreviations have the following meanings:

| | | |
|---|---|---|
| M | = | Molar |
| mHTF | = | modified human tubal fluid |
| Min | = | Minute |
| mL | = | Milliliter |
| p/n | = | Part number |
| SSS | = | synthetic serum supplement |

### EXAMPLE 1

### Freezing the Oocytes

In Example 1 below, the following solutions are recited and were prepared as follows:
**First Stabilization Solution.** A first stabilization solution for oocyte freezing was prepared by using Global Media (IVF Online) with approximately 10% by volume SSS.
**Second Stabilization Solution.** A second freezing solution was prepared and comprises approximately 80% by volume mHTF, supplemented with SSS. The solution should be stored at 4°C prior to use.
**Cryoprotectant Solution.** A cryoprotectant solution is prepared from approximately 1.5 M propylene glycol in mHTF, supplemented with SSS (80:20) and preferably maintained at pH 7.2 to 7.3.
**Dehydrating/Cryoprotectant (D/C) Solution 1.** D/C Solution 1 is comprised of approximately 1.5M propylene glycol suspended in sucrose and further comprising 80:20 mHTF/SSS. Preferably, the sucrose concentration is 0.05 to 0.15M, with a preferred concentration of 0.12M. Preferably this solution is maintained at a pH of from 7.2 to 7.3.
**Dehydrating/Cryoprotectant (D/C) Solution 2.** D/C Solution 2 is comprised of approximately 1.5M propylene glycol suspended in sucrose and further comprising 80:20 mHFT/SSS. Preferably the sucrose is 0.20M to 0.30M, with a preferred concentration of 0.24M. Preferably this solution is maintained at a pH of from 7.2 to 7.3.

### Osmolality of Solutions

The propylene glycol (an anti-freeze) produces artificially high numbers for the osmolality of the solution as the solution freezing point is substantially depressed over typical solutes. The following table provides preferred osmolality for each of the components used which can be achieved by modifying the solution using conventional methods.

| **Solution** | **Preferred Osmolality, mOsm** | **Constituents** |
|---|---|---|
| First Stabilization Solution | 275-305 | Global Media and SSS |
| Second Stabilization Solution | 275-305 | m-HTF and SSS |
| Cryoprotectant solution | 1500-1900 | m-HTF, SSS and propylene glycol |
| D/C 1 | 1700-2000 | m-HTF, SSS , propylene glycol and sucrose |
| D/C 2 | 1900-2200 | m-HTF, SSS , propylene glycol and sucrose |

The osmolality data demonstrates that the stabilization solutions provide the oocytes an opportunity to stabilize in a solution of low to intermediate osmolality prior to immersion in the cryoprotectant solutions having higher osmolality. In addition, the higher temperatures employed in these solutions as compared to the prior art provides additional stability. Each of the above coupled with the immersion times described are employed to stabilize the meiotic spindle of the oocyte which is key to maintaining viability of the oocyte to fertilization after thawing.

It is particularly important that the osmotic differential between in the cryoprotectant solution as well as in the dehydrating/cryoprotecting solutions be sufficiently robust to drive the osmotic exchange without damage to the spindles. If the osmotic differential is too low, then the driving force for osmosis is reduced leading to longer exposure time and possible damage to the spindles. On the other hand, if the osmotic differential is too high, then lysis of the cell membrane can occur.

The osmolality and immersion times for each solution are coupled in a manner that a sufficiently high osmolality of the cryoprotectant solution and the dehydrating/cryoprotecting solutions are required to facilitate rapid exchange of the intracytoplasmic water with cryoprotectant. Specifically, prolonged exposure of the oocytes to these solutions result in increased toxicity and increased irreversible spindle damage. Accordingly, in a preferred embodiment, the immersion times provided above for the cryoprotectant solution and the dehydrating/cryoprotectant solution are relative to the osmolality of these solutions and are selected to maximize oocyte viability.

In a preferred embodiment, the osmolality of the cryoprotectant solution as well as the dehydrating/cryoprotecting solutions is preferably in the range of from about 1000 to 3000 and more preferably from about 1200 to 2500. In a particularly preferred embodiment, the osmolality of the solutions is an upward gradient for each successive solution used. The Table above provides preferred osmolality ranges.

In a preferred embodiment of the present invention, human oocytes are obtained by ultrasound guided technique, known to those of skill in the art.

The harvested Metaphase II (MII) oocytes are examined and those that are spherical, translucent and have extruded their first polar body, are placed into a dish (such as Nunc 4 well dish) containing the **First Stabilization Solution.** The dish is put into a tri-gas incubator with an atmosphere of 89-90% N₂; 5-6% CO₂ and 5%O₂ at 33 to 38°C, preferably 36.5 to 37.5°C for about 2 hours. In a preferred embodiment, the percent CO₂ is adjusted to provided for a pH of the solution of approximately 7.2-7.3. Without being limited to any theory, it is believed that the pH of the stabilization solution is important in maintaining the viability of the oocytes and that careful control of the pH is achieved by adjusting the amount of CO₂ in the solution wherein the pH is controlled t correspond to the intracellular pH of the oocyte. Preferably, the cumulus mass is now removed from the oocyte

Next, the oocytes are transferred into the **Second Stabilization Solution** and cultured for up to 6 to 7 minutes, preferably a range of 2 to 5 minutes, more preferably about 3 minutes in a dish (such as Nunc 4 well dish) at 33 to 38°C, preferably 36.5 to 37.5°C.

Preparations are then made for the oocyte transition into the **Cryoprotecting Solution**, the solution is contained within a dish (such as Nunc 4 well dish) and held at about 35 to 37°C for between 1 to 5 minutes, preferably a range of 1.5 to 3 min and more preferably about 2 minutes.

Next, the oocytes are transferred into **D/C Solution 1**, the solution is contained within a dish (such as Nunc 4 well dish) and held at 35 to 37°C, for about three minutes. The temperature of this solution is then gradually decreased at a rate of 1 to 3°C/min, preferably 2 ± ½ °C/min to a temperature of 22 to 26°C, preferably about 24°C in 8 minutes maximum, and preferably in about 5 minutes.

After completing Step e), The oocytes are then transferred into **D/C Solution 2,** the solution is contained within a dish (such as Nunc 4 well dish) for about 1 to 5 minutes, preferably 1.5-3 minutes, and optimally about 2 minutes at 24°C, while simultaneously loading the oocytes into 0.25 ml plastic straws, available from the IMV International company of Minneapolis MN. The straws are sealed at both ends and placed in an automated biological vertical freezer like the Kryo 10 Series III (Planer 10/1.7 GB).

The straws are chilled at a cooling rate of 2-3°C/min to -7°C. At this temperature, "seeding" is performed by touching the outside of the straw with forceps, which were cooled in liquid nitrogen to induce the water molecules to undergo crystallization. The straws are held at -7°C for ten minutes followed by resumption of cooling at a rate of 0.3°C/minute to -33°C to allow diffusion of the cryoprotectant into the oocyte. The straws are then plunged into liquid nitrogen for storage.

In the preferred embodiment of the invention, the intracellular cytoplasmic organelles and meiotic spindle are spared the injury resulting from the shearing force of ice crystal formation and the exposure to room temperature associated with other freezing protocols.

Furthermore, by limiting the time and temperature exposure of the oocyte to the propylene glycol cryoprotectant, the present invention minimizes toxicity to the oocyte.

### Example 2

### Method for Thawing Oocytes

The reversal of human oocyte freezing is carried out when fertilization of the oocytes is planned. Reanimation of the egg from deep cryostorage requires an efficient and rapid reversal of the freezing phase in such a way as to minimize recrystalization which can occur if the thawing process is performed too slowly.

In a preferred embodiment, the reanimation or thawing phase comprises removing the containers (straws) from the liquid nitrogen container. The straws are held at room temperature for 15 seconds and then submersed in a water bath at about 31°C for 15 seconds.

In the following steps, thawing of the oocytes is conducted under conditions to remove cryoprotectant from the cytoplasm quickly, while avoiding osmotic shock to the oocyte. The aim of the of these steps is to direct a smooth and efficient diffusion of the highly concentrated intracellular cryoprotectant out of the ooplasm by manipulating the concentration of the propylene glycol cryoprotectant. The oocytes are subjected to three successive rinses of:
**Thawing Solution A:** Approximately 1.0M propylene glycol and sucrose in m-HTF and SSS. The sucrose concentration is 0.20 to 0.35 M sucrose, preferably about 0.29 M. This solution is used at 30 to 34°C, preferably at 31 to 33°C, more preferably at 32 ± 0.5°C, for 4-7 minutes, preferably about 5 minutes.
**Thawing Solution B:** Approximately 0.5 M propylene glycol and sucrose in m-HTF and SSS. The sucrose concentration is 0.20 to 0.35 M sucrose, preferably about 0.29 M. This solution is used at 30 to 34°C, preferably at 31 to 33°C, more preferably at 32 ± 0.5°C, for 4-7 minutes, preferably about 5 minutes.
**Thawing Solution C:** Sucrose in m-HTF and SSS (zero propylene glycol). The sucrose concentration is 0.20 to 0.30M, preferably about 0.25M. This solution is used at 30 to 34°C, preferably at 31 to 33°C, more preferably at 32 ± 0.5°C, for 4-7 minutes, preferably about 5 minutes.

After completing the above steps, the oocytes are ready for incubation. At a temperature of 37°C, the oocytes are incubated in the **Thawing Stabilization Solution,** which is as described in Example 1 for the First Stabilization Solution, for two hours using a tri-gas incubator with an atmosphere of 89-90% N₂; 5-6% CO₂ and 5%O₂ wherein the amount of CO₂ employed is selected to provide a pH of from 7.2 to 7.3. The oocytes have thus been returned to animation.

### Fertilization of the oocyte:

If insemination of the oocytes is planned, conventional intracytoplasmic sperm injection technique(ICSI) is employed because the zona pellucida has become hardened as a by-product of the freezing process. Failure to recognize this important step will lead to very low fertilization rates accounting for the disappointing results with other protocols.

Thus, using the improved embodiment of the invention for the freezing or thawing of fresh human oocytes, excellent survival rates, improved fertilization and embryo cleavage rates can be achieved.

The table below provides a comparison of overall success relative to the reported literature:

| | | | | | |
|---|---|---|---|---|---|
| **Year** | **Article** | **Egg/Preg. Ratio** | **Egg thawed/ Eggs survived¹** | **Eggs used** | **Pregnancies** |
| 1999 | Porcu, et al., Fertil. Steril., (1999); 72 (Suppl).S2 | 100:1 | | 1502 | 16 |
| 1996 | Tucker, et al., Human Prod., 1996;11:1513-1515 | 62:1 | | 311 | 5 |
| 1999 | Yang, et al., Fertil.Steril., 1999; 72 (Suppl)S86 | 17:1 | | 120 | 7 |
| 2003 | Fosas, 2003 Hum. Reprod. 2003:18 1417-01421 | 22:1 | | 88 | 4 |
| 2007 | Barritt, Fert. & Ster., 87(1) (2007) | 13:1 | | 79 | 6 (fetal heartbeats)² |
| | Diaz³ | 10.8:1 | 326/302 | 326 | 28 |

| | | | | | |
|---|---|---|---|---|---|
| ¹ Cell membrane intact - no lysis ² Only the Barritt reference used fetal heartbeats as a measure of pregnancy. The other citations employed HCG levels. ³ Data for this invention | | | | | |

The above data demonstrates that the freezing methods of this invention when coupled with thawing methods provide for high success rates in pregnancy.

### Example 3

### Solutions

The following Tables demonstrate various solution formulations that can be used for the freezing or thawing of the oocytes in this invention. These solution formulations can replace the solutions used in this invention that are obtained from commercial sources. All amounts in the Tables 1-9 below are provided at numerical values to give an optimum result. It is understood that each constituent member is in the range of ±25%, ±10%, preferably ±5%, more preferably ±3%, or even more preferably ±1% in the solution. One skilled in the art can adjust requisite osmolality of the solution for the purposes defined herein.

The following Table 1 shows a fomulation of a stabilization solution for a 1-liter base solution.

**Table 1: Suspend A**

| **Constituents** | **mmoles/L** | **mg/L Req'd** |
|---|---|---|
| Water for injection | | **1L** |
| Sodium chloride | 95.000 | **5551.8** |
| Potassium chloride | 3.0 | **223.6** |
| Calcium chloride | 1.800 | **264.6** |
| Potassium phosphate | 0.350 | **60.9** |
| Magnesium sulfate | 4.000 | **481.6** |
| Sodium bicarbonate | 22.50 | **1890.2** |
| Glucose | 0.220 | **39.6** |
| Lactate, sodium salt, solution | | **1.42 ml/L** |
| Sodium pyruvate | 0.22 | **24.2** |
| L-phenylalanine | .090 | **14.8** |
| L-tryptophan | 0.0225 | **4.6** |
| L-lysine HCI | 0.180 | **39.4** |
| L-threonine | 0.180 | **21.4** |
| L-valine | 0.180 | **21.1** |
| L-Methionine | 0.045 | **6.7** |
| L-isoleucine | 0.180 | **23.6** |
| L-leucine | 0.180 | **23.6** |
| L-proline | 0.045 | **5.2** |
| glycine | 0.045 | **3.4** |
| L-alanine | 0.045 | **4.0** |
| L-tryosine | 0.090 | **16.3** |
| L-histidine HCI | 0.090 | **13.9** |
| L-arginine HCI | 0.270 | **56.9** |
| L-aspartic acid | 0.045 | **6.0** |
| L-serine | 0.045 | **4.7** |
| L-asparagine | 0.270 | **40.5** |
| L-glutamic acid | 0.045 | **8.3** |
| L-cystine | 0.045 | **10.8** |
| Alanyl-glutamine | 0.450 | **97.7** |
| EDTA | 0.009 | **3.4** |
| Phenol Red | 1.5 µg/ml | **1.5** |
| Gentamicin sulfate | 0.01 µg/ml | **0.01** |
| Human Serum Albumin | | **5.04 g/L** |
| Alpha Globulin | | **0.48 g/L** |
| Beta Globulin | | **0.48 g/L** |

The following Table 2 shows a fomulation of a stabilization solution for a 1-liter base solution.

**Table 2: Suspend B**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |

The following Table 3 shows a fomulation of a cryoprotectant solution for a 1-liter base solution.

**Table 3: Suspend C**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Propylene glycol | 1.5M | **114.15 g/L** |

The following Table 4 shows a fomulation of a cryoprotectant solution for a 1-liter base solution.

**Table 4: Suspend D**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.5M | **114.15 g/L** |
| Sucrose, Crystal, NF | 0.12M | **42.28 g/L** |

The following Table 5 shows a fomulation of a cryoprotectant solution for a 1-liter base solution.

**Table 5: Suspend E**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.5M | **114.15 g/L** |
| Sucrose, Crystal, NF | 0.24M | **84.552 g/L** |

The following Table 6 shows a fomulation of a cryoprotectant solution for a 1-liter base solution.

**Table 6: Renew 1**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.0M | **76.10 g/L** |
| Sucrose, Crystal, NF | .29M | **102.16 g/L** |

The following Table 7 shows a fomulation of a cryoprotectant solution for a 1-liter base solution.

**Table 7: Renew 2**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 0.5M | **38.05 g/L** |
| Sucrose, Crystal, NF | .29M | **102.16 g/L** |

The following Table 8 shows a fomulation of a dehydrating solution for a 1-liter base solution.

**Table 8: Renew 3**

| **Constituents** | **mmoles/L** | **mg/L req'd** |
|---|---|---|
| Water for injection | | **1 L** |
| Sodium chloride | 95.000 | **5.551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| | | |
| Sucrose, Crystal, NF | .29M | **102.16 g/L** |

The following Table 9 shows a fomulation of a stabilization solution for a 1-liter base solution.

**Table 9: Renew 4**

| **Constituents** | **mmoles/L** | **mg/L req'd** |
|---|---|---|
| Water for injection | | **1 L** |
| Sodium chloride | 95.000 | **5551.8** |
| Potassium chloride | 3.00 | **223.6** |
| Calcium chloride | 1.800 | **264.6** |
| Potassium phosphate | 0.350 | **60.9** |
| Magnesium sulfate | 4.000 | **481.6** |
| Sodium bicarbonate | 22.50 | **1890.2** |
| Glucose | 0.220 | **39.6** |
| Lactate, sodium salt, Solution | | **1.42 ml/L** |
| Sodium pyruvate | 0.220 | **24.2** |
| L-phenylalanine | .090 | **14.8** |
| L-tryptophan | 0.0225 | **4.6** |
| L-lysine HCI | 0.180 | **39.4** |
| L-threonine | 01.80 | **21.4** |
| L-valine | 0.180 | **21.1** |
| L-Methionine | 0.045 | **6.7** |
| L-isoleucine | 0.180 | **23.6** |
| L-leucine | 0.180 | **23.6** |
| L-proline | 0.045 | **5.2** |
| glycine | 0.045 | **3.4** |
| L-alanine | 0.045 | **4.0** |
| L-tyrosine | 0.090 | **16.3** |
| L-histidine HCI | 0.090 | **13.9** |
| L-arginine HCI | 0.270 | **56.9** |
| L-aspartic acid | 0.045 | **6.0** |
| L-serine | 0.045 | **4.7** |
| L-asparagine | 0.270 | **40.5** |
| L-glutamic acid | 0.045 | **8.3** |
| L-cystine | 0.045 | **10.8** |
| Alanyl-glutamine | 0.450 | **97.7** |
| EDTA | 0.009 | **3.4** |
| Phenol Red | 1.5 µg/ml | **1.5** |
| Gentamicin sulfate | 0.01 µg/ml | **0.01** |
| Human Serum Albumin | | **5.04 g/L** |
| Alpha Globulin | | **0.48 g/L** |
| Beta Globulin | | **0.48 g/L** |

It will be appreciated that the invention has been described hereabove with reference to certain examples or preferred embodiments as shown in the drawings. Various additions, deletions, changes and alterations may be made to the above-described embodiments and examples without departing from the intended spirit and scope of this invention.

## Claims

1. A method for cryopreserving mature harvested mammalian oocytes from freshly harvested mature mammalian oocytes which method comprises:
a) incubating freshly harvested mature oocytes in one or more stabilization solutions maintained at a temperature of from about 33°C to about 38°C for a period of time sufficient to stabilize the oocytes to *in vitro* conditions wherein when more than one stabilization solution is employed, each solution is different from each other;
b) introducing cryoprotectant into the stabilized mature oocyte from a) above by contacting the oocyte with an aqueous solution comprising a cryoprotectant maintained at a temperature of from about 33°C to about 38°C under conditions wherein at least a portion of the intra-cytoplasmic water is replaced by cryoprotectant;
c) transferring the oocyte from b) above to at least a first dehydrating/cryoprotecting solution comprising a cryoprotectant and a dehydrating agent maintained at a temperature of from about 33°C to about 38°C under conditions sufficient to remove additional intra-cytoplasmic water while introducing additional cryoprotectant into the cytoplasm;
d) decreasing the temperature of the dehydrating/cryoprotecting solution of c) above to a temperature of about 22°C to about 26°C during a period of from about 3 to 10 minutes;
e) transferring the oocyte in the dehydrating/protecting solution formed in d) above into a container which is then sealed; and
f) cryopreserving the oocytes.

2. The method of Claim 1, wherein the oocytes are human oocytes.

3. The method of Claim 2, wherein two stabilization solutions are employed.

4. The method according to Claim 3, wherein the stabilization solutions are selected from the group consisting of Global Media, Global Media supplemented with synthetic serum substitute (SSS), human tubal solution (HTF) optionally substituted with SSS and/or an antibiotic and modified HTF (mHTF) optionally with SSS and/or antibiotic.

5. The method of Claim 2, wherein *in vitro* stabilization of the oocyte(s) is conducted in a first stabilization solution at a temperature of from about 35°C to 38°C for a period of from about 1 to 3 hours.

6. The method of Claim 2, wherein *in vitro* stabilization of the oocyte(s) is conducted in a Global media supplemented with SSS maintained at a temperature of about 36.5°C to 37.5°C for a period of about 2 hours.

7. The method of Claim 6, wherein the SSS is present in about 10 volume percent.

8. The method of Claim 1 wherein the oocytes are transferred from the first stabilization solution to a second stabilization solution also maintained at a temperature of from about 33°C to 38°C for a sufficient period to permit further stabilization of the oocytes prior to introduction of cryoprotectant into the oocyte.

9. The method of Claim 8, wherein the second stabilization solution is selected from the group consisting of Global Media, Global Media supplemented with synthetic serum substitute (SSS), human tubal solution (HTF) optionally substituted with SSS and/or an antibiotic and modified HTF (mHTF) optionally with SSS and/or antibiotic.

10. The method of Claim 9, wherein *in vitro* stabilization of the oocyte(s) is conducted in a second stabilization solution which comprises mHTF and SSS.

11. The method of Claim 10, wherein the second stabilization solution comprises mHTF and from about 10-30 volume percent SSS maintained at a temperature of from about 33°C to 38°C for a period of from about 1-8 minutes.

12. The method of Claim 11, wherein the second stabilization solution comprises mHTF and about 20 volume percent SSS maintained at a temperature of from about 36.5°C to 37.5°C for a period of about 2 to 5 minutes.

13. The method of Claim 2, wherein cryoprotectant is introduced into the stabilized mature animal oocyte by contacting the stabilized oocyte with an aqueous solution comprising a cryoprotectant maintained at a temperature of from about 33°C to about 38°C.

14. The method of Claim 13, wherein the cryoprotectant solution comprises a cryoprotectant and SSS.

15. The method of Claim 14, wherein the cryoprotectant is propylene glycol (PG).

16. The method of Claim 15, wherein the cryoprotectant solution comprises propylene glycol and from about 20 volume percent SSS initially maintained at a temperature of about 35°C to 37°C wherein the concentration of propylene glycol in the cryoprotectant solution is 1.5 M.

17. The method of Claim 13, wherein the introduction of cryoprotectant is maintained for a period sufficient to introduce at least a portion of cryoprotectant into the cytoplasm of the oocyte with the concomitant expulsion of intra-cytoplasmic water.

18. The method of Claim 17, wherein the introduction of cryoprotectant is maintained for a period of time ranging from about 1 to 5 minutes.

19. The method of Claim 2, wherein the oocyte(s) recovered from procedure b) are incubated in a first dehydrating/cryoprotecting solution initially maintained at a temperature of from about 33°C to 38°C for a period sufficient to effect additional dehydration coupled with introduction of additional cryoprotectant into the oocyte.

20. The method of Claim 19, wherein the incubation of the oocytes in the first dehydrating/cryoprotecting solution is maintained for a period of time from about 1 to 5 minutes.

21. The method of Claim 19 wherein, after incubation, the first dehydrating/cryoprotecting solution is then cooled over a period of about 3 to 10 minutes to a temperature of from about 22°C to 26°C.

22. The method of Claim 21, wherein the first dehydrating/cryoprotecting solution comprises from about 1 to 2 M propylene glycol and from about 0.05 to 0.15 M sucrose.

23. The method of Claim 2, which comprises incubation of the oocyte(s) in a second dehydrating/cryoprotecting solution.

24. The method of Claim 23, wherein the dehydrating/cryoprotecting solution in the second incubation comprises from about 1 to 2 M propylene glycol and from about 0.15 to 0.3 M sucrose while maintaining a temperature of from about 22°C to 26°C.

25. The method of Claim 23 wherein the exposure time of the oocytes to the second dehydrating/cryoprotecting solution is from about 1 to 5 minutes.

26. A stabilization solution for oocyte cryopreservation, comprising:
a stabilization solution selected from the group consisting of Global Media, Global Media supplemented with synthetic serum substitute (SSS), human tubal solution (HTF), human tubal solution (HTF) substituted with SSS and/or an antibiotic, modified HTF (mHTF), and modified HTF (mHTF) with SSS and/or antibiotic;
wherein the stabilization solution is at a temperature of from about 33°C to 38°C.

27. The stabilization solution of claim 26, wherein the stabilization solution is at a temperature of from about 35°C to 38°C.

28. The stabilization solution of claim 26, wherein the stabilization solution is at a temperature of from about 36.5°C to 37.5°C.

29. The stabilization solution of claim 26, wherein the stabilization solution is for oocyte freezing.

30. The stabilization solution of claim 29, wherein the stabilization solution minimizes a cellular stress on changing an environment of an oocyte from *in vivo* to *in vitro.*

31. The stabilization solution of claim 26, wherein the stabilization solution is for oocyte thawing.

32. The stabilization solution of claim 31, wherein the stabilization solution stabilizes an oocyte prior to fertilization.

33. The stabilization solution of claim 26, wherein the stabilization solution comprises the Global media supplemented with about 10 volume percent SSS maintained at a temperature of from about 36.5°C to 37.5°C.

34. The stabilization solution of claim 26, wherein the stabilization solution comprises mHTF and SSS maintained at a temperature of from about 35°C to 38°C.

35. The stabilization solution of claim 34, wherein the stabilization solution comprises mHTF and from about 10-30 volume percent SSS.

36. The stabilization solution of claim 26, wherein the stabilization solution comprises mHTF and about 20 volume percent SSS maintained at a temperature of from about 36.5°C to 37.5°C.

37. The stabilization solution of claim 26, wherein the stabilization solution is selected from the group consisting of Table 1, Table 2, and Table 9.

38. A cryoprotectant solution for oocyte freezing, comprising a cryaoprotectant wherein the cryoprotectant solution is maintained at a temperature of from about 33°C to 38°C, and wherein the cryoprotectant solution promotes a survival of an oocyte during a process of cryopreservation.

39. The cryoprotectant solution of claim 38, wherein the cryoprotectant is selected from the group consisting of dimethylsulfoxide, ethylene glycol, propylene glycol, glycerol, and combination thereof.

40. The cryoprotectant solution of claim 38, wherein the cryoprotectant is propylene glycol.

41. The cryoprotectant solution of claim 40, wherein the cryoprotectant further comprises SSS.

42. The cryoprotectant solution of claim 38, wherein the cryoprotectant solution comprises propylene glycol and about 20 volume percent SSS.

43. The cryoprotectant solution of claim 38, wherein the cryoprotectant is propylene glycol and about 20 volume percent SSS wherein the propylene glycol is at a concentration of from 1 to 2 M.

44. The cryoprotectant solution of claim 38, further comprising an agent that facilitates dehydration of an intra-cytoplasmic water in the oocyte during the cryopreservation.

45. The cryoprotectant solution of claim 44, wherein the agent is selected from the group consisting of sucrose, dextrose, trehalose, lactose, and raffinose.

46. The cryoprotectant solution of claim 45, wherein the agent is sucrose.

47. The cryoprotectant solution of claim 38, wherein the cryoprotectant is 1.5 M propylene glycol and the agent is 0.12 M sucrose.

48. The cryoprotectant solution of claim 38, wherein the cryoprotectant is 1.5 M propylene glycol and the agent is 0.24 M sucrose.

49. The cryoprotectant solution of claim 38, wherein the cryoprotectant solution is maintained at a temperature of from about 35°C to 37°C.

50. The cryoprotectant solution of claim 38, wherein the cryoprotectant solution is selected from the group consisting of Table 3, Table 4, and Table 5.
